# EUROPEAN PATENT APPLICATION

(11) **EP 2 945 063 A1**
(43) Date of publication of application: **18.11.2015**
(21) Application number: 13870545.4
(22) Date of filing: 09.01.2013
(51) Int. Cl.: G06F 9/50

(54) **PLANT ENGINEERING SYSTEM**

(71) Applicant: Mitsubishi Electric Corporation, Tokyo 100-8310 (JP)
(72) Inventor: TAKEMURA Hideo, Tokyo 100-8310 (JP)
(74) Representative: Sajda, Wolf E.
(86) International application number: PCT/JP2013/050216
(87) International publication number: WO 2014/109019

(57) **Abstract**

An engineering device (1), outside a plant control device (2), which generates operating definition information in which assignment of control tasks to a multi-core unit of the plant control device (2) has been adjusted so that control task execution loads for each core of the multi-core unit are equalized, whereupon the generated operating definition information is transferred via a network (3) from the engineering device (1) to the plant control device (2), thereby, control task execution processing load of the plant control device executing the control tasks is reduced so that cores can be effectively utilized for plant control, and execution processing of the control tasks can be sped up.

## Description

### Technical Field

The invention relates to a plant engineering system which generates the control tasks of a plant control device, used at plant such as a power plant.

### Background Art

In a conventional plant engineering system, in any one of the multicore processor loaded in a plant control device which performs the control tasks, the assignment process has been run dynamically to the core of control tasks.
Patent Literature 1 JP 2012-108 576 A (FIG. 1 and explanation thereof)

### Disclosure of the Invention

### Technical Problems

In a conventional plant engineering system, as any one of the multicore processor loaded in a plant control device which performs the control tasks the assignment process has been run dynamically to the core of the control tasks, it was impossible to use effectively the core for the plant control. Also, in the assignment process to the core of the control tasks, the emphasis was put on an optimal solution to minimize the assignment processing time, but then any control tasks could not be assigned to any core.

The present invention was made in the light of the circumstances as described above, and it is an object of the present invention to reduce the control tasks execution processing load of the plant control device which executes the control tasks, to use effectively the core for the plant control, and to increase the speed of the control tasks execution process.

### Solution to the Problem

In a Plant Engineering System, based on the present invention, which perform generation of control tasks of a plant control device that executes the control tasks based on operating definition information, an engineering device outside the plant control device generates the operating definition information regulating, the assignment of the control tasks to multi-core of the plant control device equalize the execution load of the control tasks of each core of the multi-core, whereupon the generated operating definition information is transferred via a network from the engineering device to the plant control device, thereby the execution processing load of the control tasks of the plant control device which executes the control tasks is reduced, the core can be effectively used for the plant control, and the execution processing of the control tasks is increased in speed.

### Advantageous Effects of the Invention

According to the present invention, in a plant engineering system which perform generation of control tasks of a plant control device that executes the control tasks based on operating definition information, an engineering device outside the plant control device generates the operating definition information regulating the assignment of the control tasks to multi-core of the plant control device equalize the execution load of the control tasks of each core of the multi-core, whereupon the generated operating definition information is transferred via a network from the engineering device to the plant control device, thereby the execution processing load of the control tasks of the plant control device which executes the control tasks is reduced, the core can be effectively used for the plant control, and the execution processing of the control tasks is increased in speed.

### Brief Description of the Drawings

- FIG. 1: is a diagram showing a first embodiment of the present invention and illustrating an example of an engineering system.
- FIG. 2: is a diagram showing the first embodiment of the present invention, and illustrating the outline of a program generation unit in FIG. 1.
- FIG. 3: is a diagram showing the first embodiment of the present invention, and illustrating an example of an execution cycle setting section.
- FIG. 4: is a diagram showing the first embodiment of the present invention, and illustrating an example of an automatic setting unit in the defined operation of an engineering device in FIG 1.
- FIG. 5: is a diagram showing the first embodiment of the present invention, and illustrating an example of a manual setting unit in the defined operation of the engineering device in FIG. 1.

### Description of Embodiments

### First Embodiment.

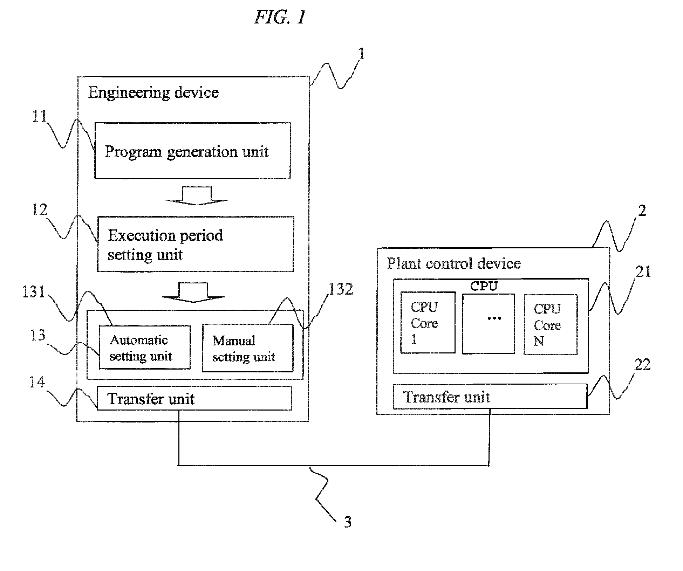

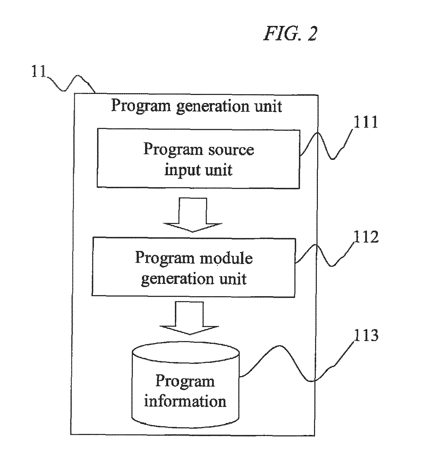

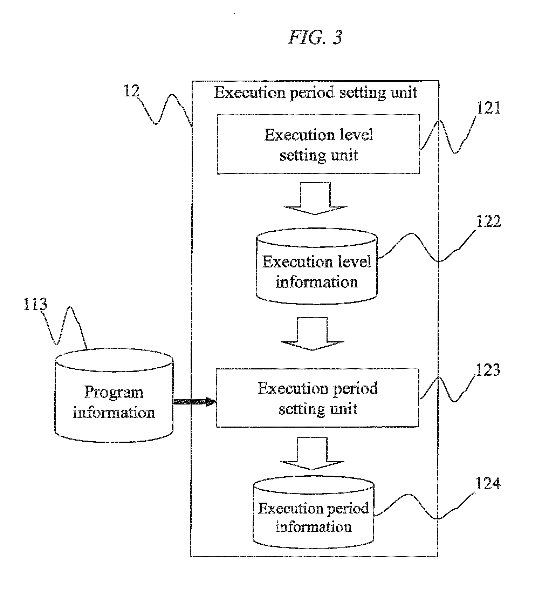

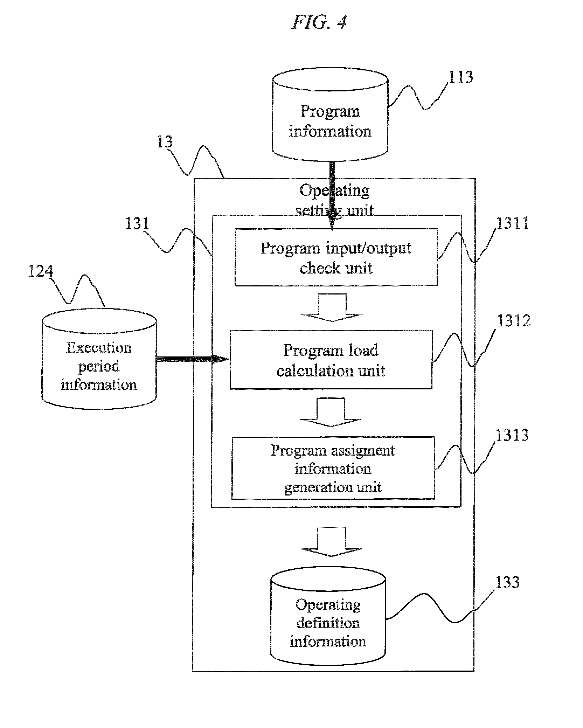

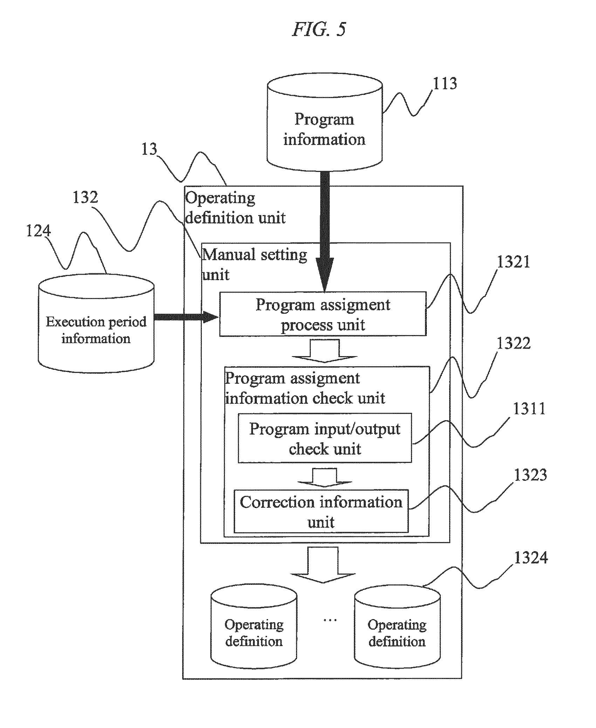

Hereinafter, a first embodiment of the present invention will be described with reference to FIGS. 1 to 5. FIG. 1 is a diagram representing an example of an engineering system, FIG. 2 is a diagram representing the outline of a program generation unit in FIG. 1, FIG. 3 is a diagram representing an example of an execution cycle setting section, FIG. 4 is a diagram representing an example of an automatic setting unit in the defined operation of an engineering device in FIG 1, and FIG. 5 is a diagram representing an example of a manual setting unit in the defined operation of the engineering device in FIG. 1.

According to the first embodiment of the present invention, in the example of an engineering system FIG. 1, an engineering system is a system which an engineering device 1 and a controller unit that is a plant control device (hereinafter referred as " plant control device ") 2 are connected by a maintenance network 3, and which transfers to the plant control device 2 through the network 3 an operating definition information defined by an assignment of the control tasks to each core of the plant control device 2 as well as an information program created by the engineering device 1.

Further, in the control tasks, from the fact that the definition attached by the contents operations of the computer program is executed by the CPU, the information to set the control tasks are called operating definition information.

The engineering device 1, above the plant control device 2 which is a controller unit (hereinafter, referred as "plant control device"), is a unit that creates an action program.

This engineering device 1 is, as illustrated by example in FIG. 1, is constructed by a program generation unit 11, an execution cycle setting unit 12, operating definition unit 13, as well as a transmission unit 14.

The program generation unit 11, as illustrated in FIG. 2, includes a program source input unit 111, as well as a program modules generator 112, and generates a program information 113.

The execution cycle setting unit 12, as illustrated in the example in FIG.3, includes an execution level setting unit 121, as well as an execution cycle setting unit 123, and generates an execution level information 122 as well as an execution period information 124.

The operating definition unit 13, as illustrated as example in FIG. 1, includes an automatic setting unit 131, as well as a manual setting unit 132.

The automatic setting unit 131, as illustrated in example in FIG.4, includes a program input/output checking unit 1311, a program load calculating unit 1312, as well as a program assignment information generator 1313, and generates an operation definition information 133.

The manual setting unit 132, as illustrated in example in FIG. 5, includes an assignment program unit 1321, a program assignment information check unit 1322, a program input/output check unit 1311, as well as a correction information unit 1323, and generates a plurality of operating definition information.

Further, it is not illustrated in the figures that an input device such as a keyboard, a mouse, or a touch panel and displaying monitors are connected to the engineering device 1 as same way as conventional engineering device.

Further, in FIG. 1, the engineering device 1 and the plant control device 2 shows an example where each other are respectively connected to the maintenance network 3, but may also be constructed with a plurality of engineering device and plant control device to be connected to the network 3.

The plant control device 2, is an equipment which includes a CPU 21 being a multicores-processer that own many multicores from Core 1 to Core N, stores the program generated by and received from the engineering device 1, and executes the appropriate program, that is, executes the control tasks, thereby controls the plant such the power plant.

The operation will be described next.

The program generation unit 11 in the engineering device 1, create a plant control logic, edit, compile the created plant control logic, and create the program information.

The execution cycle setting unit 12 in the engineering device 1 generate the execution cycle of the task control executed in the control unit 2, and the execution level that define the execution period information.

Further, the execution level is a parameter to control the degree of relative priority of the control tasks.

The operating definition unit 13 in the engineering device 1, by the automatic setting unit 131 and the manual setting unit 132, creates the operating definition information defined by the assignment of the control tasks of each core 1 to core N of the multicore of the plant control device 2.

The transmission unit 14 in the engineering device 1 transfers to the plant control device 2 through the maintenance network 2 the program information generated by the program generating unit 11 above-mentioned, as well as the operating definition unit 13 above-mentioned.

The transmission unit 22 in the plant control device 2 receives the program information as well as the operating definition information transferred from the engineering device 1, and transfers the information to the CPU21.

The program generating unit 11 in the FIG. 2, creates the plant control logic through the program source entry unit 111, or edits the already settled entry of the plant control logic, also the program module unit 112 compiles the created program source entry unit 111 or the edited plant control logic, and generates the program information.

The execution period setting unit 12 in FIG. 3 generates the execution period of the control tasks executed in the plant control device 2 and the execution level that defines the execution period information 124.

The execution level setting unit 121 of the execution period setting unit 12 has a basic cycle to execute the control tasks in the plant control device 2, has the ability to set an execution level defined by multiples integer number of the basic cycle, and generate the execution level information 122.

The execution period setting unit 123 of the execution period setting unit 12 has the ability to set the execution period of the control program executed as a control tasks in the plant control device 2, and to generate the execution period information 124 from the execution level information 122 and the program information 113.

The operating definition unit 13 in FIG. 4 generates the operating definition information 133 defined by the operating information of the control tasks executed in the plant control device 2.

In the automatic setting unit 131 constructed by the program input/output check unit 1311 and the program load calculation unit 1312, the program input/output check unit 1311, from the program information 113, analyzes the dependence of the input and output between the control tasks.

Based on this analysis, the control tasks that have dependence are grouped, a single group for the control tasks without dependence is defined, these groups are summarized in a group table, and transferred to the program load calculation unit 1312.

The program load calculation unit 1312, estimates the run time of each control tasks from the execution period information 124, and calculates the run load factor of each control tasks from each control tasks run time and execution period.

For the load efficiency of the control tasks of each core from core 1 to core N of the plant control device 2 to be equal (to be equalized), each group are allocated in each core, and the operating definition information 133 are generated.

In the first embodiment, outside of the plant control device 2 which executes the control tasks (engineering device 1), the operating definition information in which assignment of control tasks to a multi-core unit of the plant control device has been adjusted to be created automatically, this definition, by pointing the plant control device which executes the control tasks, decrease the load charge of the plant control device 2 that executes the control tasks, use effectively the core for the plant control, and the execution processing of the control tasks can be sped up.

As described in the paragraph 0003, in a conventional plant engineering system, as any one of the multicore processor loaded in a plant control device which performs the control tasks, the assignment process has been run dynamically to the core of the control tasks, it was impossible to use effectively the core for the plant control.

As in the first embodiment, if another load of the task assignment disappears, since the core and the plant control can be subjected to be in charge of this load, reduce the load process of the entire multicore, namely plant control device 2, becomes possible.

Further, conventionally, excepting its original purpose, for any of the core to be in charge of the assignment process to the control tasks core plant control, it was impossible to execute the plant control tasks in all cores.

In the first embodiment, according to the defined information created externally, for all the cores to be able to execute exclusively the plant control tasks, in other words, to use all the cores for the original purpose of the plant control, it is possible to use effectively the core for the plant control.

Also, conventionally, in a situation where a core can be used effectively, to increase the load process of each core the process performance of the tasks response performance and so forth has been deteriorated.

As in the first embodiment, if all cores execute exclusively the plant control tasks, the load process of each core can be decreased, the response performance and so forth can be increased (i.e. can be speed up the control tasks processing).

According to the FIG. 4 it is state that concerning the case, the operating definition information 133 is generated, but as illustrated by example on the FIG. 5, from the program information 113 and the execution cycle information 124, as the assignment to the core of the control tasks could have been set manually in the assignment program controlling element 1321, any control tasks can be assigned to any core of the multicore.

Since any control tasks can be assigned to any core, because of the fact that a specific control tasks is only assigned to a specific core, preferentially a control of a flexible control tasks of this executed control tasks become possible.

Further, as illustrated by example on the FIG. 5, the program assignment information check unit 1322 calls the program input/output check unit 1311, and analyzes the assignment results of the assignment program controlling element 1321. As result of this analysis, if the control tasks that has dependency in the input and output is assigned to a different core, a warning is issued.

In other words, according to the manual assignment, even in the case of the assignment there is a risk that a discordance of the assignment in the input output between the control tasks been set, it is possible to quickly alert the user.

Also, as a result of the analysis of the program input/output check unit 1311, in the case of a warning is issued, as illustrated by example in the FIG. 5, the correction information unit 1323 presents the correction information to the user, and assist him to the correction operation.

Even if the warning is issued by manual setting, according to the presented correction information, the user can appropriately and quickly modify the assignment information.

As illustrated by example in FIG. 5, in the multiple operating definition information 1324, according to the manual setting unit 132, there is an information executed by the manual setting.

According to the manual setting unit 132 it is fine to modify the information that had been set automatically and to generate multiple operating definition information 1324 using manual setting.

In the manual setting that allocate any core in any control tasks, because a user can assign any core to any control tasks, these patterns are saved as separately operating definition information.

As it is possible to have multiple save of the operating definition information set manually, by testing each pattern in the plant control device, it is possible to perform a load testing or a performance testing in any condition.

From the explanations given above, it can be said that the present embodiment comprises the technical features 1 to 13 as follows.

### Technical feature 1

In a plant engineering system constructed by the engineering device that is executed by the control operating task actioned by the control unit that is loaded by the multicore processor which control the plant and the above-mentioned control unit, the aforementioned control unit is equipped with a function that executes the plant control tasks based on the indication of the operating definition information of the plant control tasks from the above-mentioned engineering device, the aforementioned engineering device is a plant engineering system that has the particularity to be equipped with an operating definition generating function that generates manually the operating definition information to allocate appropriately the plant control tasks to each core of the multicore actioned by the above-mentioned control unit.

### Technical feature 2

The operating definition generating function of the above-mentioned engineering device is a plant engineering system according to the technical feature 1 that has the particularity to manually change the assignment of the control operating task to each core of the multicore of the above-mentioned control unit.

### Technical feature 3

The operating definition generating function of the above-mentioned engineering device is a plant engineering system according to the technical feature 1 that has the particularity to be equipped with a function that emits a warning in the case of a dependence in a different core that had allocate the control operating task, in the case of the assignment of the control operating task to each of the multicore of the aforementioned control unit is manually changed.

### Technical feature 4

The operating definition generating function of the above-mentioned engineering device is a plant engineering system according to the technical feature 1 that has the particularity to be equipped with a function that suggests a coping strategy, in the case of a warning had been emit by using manual settings.

### Technical feature 5

The operating definition generating function of the above-mentioned engineering device is a plant engineering system according to the technical feature 1 that has the particularity to be equipped with a function that saves the defined information of multiple patterns of the manual settings.

### Technical feature 6

Regarding a plant engineering system that perform the generation of the above-mentioned control tasks of the plant control device that execute the control tasks based on the operating definition information, in an engineering device outside a plant control device above-mentioned, a plant engineering system has the particularity to generate the above-mentioned operating definition information that has regulate the control tasks run load of each core of the multicore above-mentioned to be equalized in the assignment to the multicore of the above-mentioned control unit of the above-mentioned control tasks, whereupon the generated operating definition information is transferred via a network from the engineering device to the plant control device.

### Technical feature 7

A plant engineering system according to the technical feature 6 is a plant engineering system that its particularity is that to generate operating definition information in which assignment of control tasks to a multi-core unit of the plant control device has been adjusted so that control tasks execution loads for each core are equalized in the group unit grouping the multiple control tasks that has dependencies in the control tasks.

### Technical feature 8

According to the plant engineering system feature 6 or the feature 7, a plant engineering system has the uniticulary to generate by the manual setting in the manual setting unit established by the above-mentioned engineering device the above-mentioned operating definition information regulated by the equalized control tasks run load of each of the core above-mentioned.

### Technical feature 9

According to the plant engineering system feature 6 or the feature 7, a plant engineering system has the particularity to change the aforementioned operating definition information regulated by the equalized control tasks run load of each of the core above-mentioned by the manual setting of the manual setting unit established by the above-mentioned engineering device.

### Technical feature 10

According to the plant engineering system feature 8 or the feature 9, a plant engineering system has the particularity to emit a warning in the case of dependency in the control operating task allocated by a different core.

### Technical feature 11

According to the plant engineering system feature 10, a plant engineering system has the particularity to suggest correction information in the case of the emitted warning.

### Technical feature 12

According to anyone of the plant engineering system feature 8 to the feature 10, a plant engineering system has the particularity to have multiple kind of pattern of any allocated control tasks of any core to be separately saved as operating definition information.

### Technical feature 13

According to the execution process load of the control tasks of the plant control tasks that execute the control tasks is decreased, the core can be used effectively to the plant control, execution processing of the control tasks can be sped up, also, the automatic creation of the operating definition information is replaced, and the manual setting done to the assignment of the core, the control of the control tasks is flexible.

Note that the present invention may be modified or omitted from each embodiment as appropriate within the scope of the invention.

Note that, in each drawing, the same symbols denote the same or equivalent portions.

### List of Reference Signs

- 1: engineering device
- 11: program generation unit
- 111: program source input/output unit
- 112: program module generation unit
- 113: program information
- 12: execution period setting unit
- 121: execution level setting unit
- 122: execution level information
- 123: execution period setting unit
- 124: execution period information
- 13: operating definition unit
- 131: automatic setting unit
- 1311: program input/output checking unit
- 1312: program load calculation unit
- 1313: program assignment information generation unit
- 132: manual setting unit
- 1321: program assignment controlling element unit
- 1322: program assignment information check unit
- 1323: Correction information unit
- 1324: operating definition information
- 14: transfer unit
- 2: plant control device
- 21: CPU
- 22: transfer unit
- 3: maintenance network

## Claims

1. A plant engineering system performs generation of control tasks of a plant control device that executes the control tasks based on operating definition information, wherein
an engineering device outside the plant control device generates the operating definition information regulating the assignment of the control tasks to multi-core of the plant control device to equalize the execution load of the control tasks of each core of the multi-core, whereupon the generated operating definition information is transferred via a network from the engineering device to the plant control device.

2. The plant engineering system according to claim 1,
wherein the operating definition information is operating definition information regulated by the equalized control tasks run load of each of the core in the group unit grouping control tasks that has dependencies in each of the control tasks.

3. The plant engineering system according to claim 1,
wherein an automatic setting unit included in the engineering device generates the operating definition information regulated by the equalized control tasks run load of each core.

4. The plant engineering system according to claim 1 or 2,
wherein a manual setting unit included in the engineering device a plant, the operating definition information regulated by the equalized control tasks run load of each core according to the manual settings of the manual setting unit.

5. The plant engineering system according to claim 1 or 2,
wherein the operating definition information regulated by the equalized control tasks run load of each core is changed according to the manual setting of the manual setting unit included in the engineering device.

6. The plant engineering system according to claim 4 or 5,
wherein the system emits a warning in the case of dependencies in the control operating tasks allocated by a different core.

7. The plant engineering system according to claim 6,
wherein the system suggests correction information in the case of an emitted warning.

8. The plant engineering system according to any one of claims 4 to 7, wherein plural kinds of pattern of any allocated control tasks of any core are separately saved as operating definition information.
